# EUROPEAN PATENT SPECIFICATION

(11) **EP 2 085 866 B1**
(45) Date of publication and mention of the grant of the patent: **09.06.2010**
(21) Application number: 08150870.7
(22) Date of filing: 31.01.2008
(51) Int. Cl.: G06F 3/048

(54) **Electronic device and method for controlling same**
Elektronische Vorrichtung und Steuerverfahren dafür
Dispositif électronique et son procédé de contrôle

(43) Date of publication of application: 05.08.2009
(73) Proprietor: Research In Motion Limited, Waterloo, Ontario N2L 3W8 (CA)
(72) Inventor: Ladouceur, Norman, Waterloo Ontario N2T 1A2 (CA); Fyke, Steven Henry, Waterloo, Ontario N2L 6M1 (CA)
(74) Representative: MERH-IP Matias Erny Reichl Hoffmann

(56) References cited:
- US-A1- 2006 197 750

## Description

The present application relates generally to portable electronic devices and control of electronic devices when changing modes.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. However, smaller devices can be more difficult to operate as reduced size is often provided at the expense of ease of use. Devices configured with functions that are intuitively easy to determine and use are attractive to potential users. Therefore, devices configured for easily changing between applications or modes, when desired by the user, are advantageous.
US-A-2006/0197750 discloses hand held devices with multiple touch sensing devices. The device is arranged to recognize hand images based on inputs from the touch sensing devices. The recognized hand images can be used to generate control inputs to the device and to determine the identity or handedness of a user.

Improvements in portable electronic devices are therefore desirable.

### GENERAL

According to a first aspect, there may be provided a method of controlling a portable electronic device comprising a display, the method comprising: associating touch locations on the portable electronic device outside the display with an application by determining the touch locations when in the application and storing the touch locations in association with the application; detecting touches at the stored touch locations; determining the application associated with the stored touch locations; and changing to the application associated with the stored touch locations.

The method can also comprise detecting an applied pressure and determining the application can include changing to an application associated with both the stored applied pressure and the stored touch locations. The method can also comprise measuring the pressure at more than one location on the portable electronic device. In one aspect, the pressure is measured proximal each of four corners.

According to another aspect, there may be provided a computer-readable medium having computer-readable code embodied therein for execution by a processor for detecting touches at respective touch locations on a portable electronic device, determining a mode associated with the touch locations, and changing to the mode associated with the touch locations.

According to another aspect, there may be provided a portable electronic device comprising: a housing; a display device exposed by the housing; an input device for receiving user-input; a plurality of sensors on the housing for detecting touches on the portable electronic device; and functional components housed in the housing comprising a memory device and a processor operably connected to the sensors, the display device the input device, and the memory device; and the processor for executing computer readable code stored in the memory device to cause the portable electronic device to carry out the method of the first aspect.

The portable electronic device can comprise a controller connected to both the sensors and the processor.

The plurality of touch sensors can be capacitive touch sensors in the form of buttons, for example, disposed on the housing. The touch sensors can comprise any or all of at least one touch sensor on each one of a pair of opposing sidewalls, a touch sensor on each sidewall, and or a touch sensor on the base.

The portable electronic device can also comprise a pressure sensor for determining an applied pressure. A plurality of pressure sensors can be used to determine a location of the applied pressure. In one embodiment, pressure sensors are included near each of four corners of the portable electronic device. The pressure sensors can be, for example, strain gauges or capacitive sensors.

Portable electronic device users tend to pick up portable electronic devices differently based on use. Thus, the touch locations and pressure applied to the portable electronic device may differ for different users. For example, a left-handed user touches different locations on the portable electronic device when using the portable electronic device in a phone application than a right-handed user. Further, the same user touches different locations on the portable electronic device when using the portable electronic device in an email application than when using the portable electronic device in the phone application.

Alternatively, an application can be changed based on the touch locations and applied pressure.

### BRIEF DESCRIPTION OF THE DRAWINGS

Embodiments of the present application will now be described, by way of example only, with reference to the attached Figures, wherein:

Figure 1 is a simplified block diagram of components including internal components of a portable electronic device according an aspect of an embodiment;

Figure 2A shows a front view of the portable electronic device;

Figures 2B and 2C show short side views of the portable electronic device;

Figure 2D shows a back view of the portable electronic device;

Figures 2E and 2F show long side views of the portable electronic device;

Figure 3 is a simplified sectional side view of a resistive touch screen display according to an aspect of an embodiment;

Figure 4 is a perspective view showing a user grasping the portable electronic device for use in one mode;

Figure 5 is a front view showing a user grasping the portable electronic device for use in another mode;

Figure 6 is a flow chart illustrating steps in a method of controlling an electronic device according to an aspect of an embodiment;

Figure 7 is a flow chart illustrating steps in a method of controlling an electronic device according to another aspect of an embodiment;

Figure 8 is a front view showing a user grasping the portable electronic device for use in yet another mode;

Figure 9 is a front view showing a user grasping another portable electronic device for use; and

Figure 10 is a front view showing a user grasping yet another portable electronic device for use.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

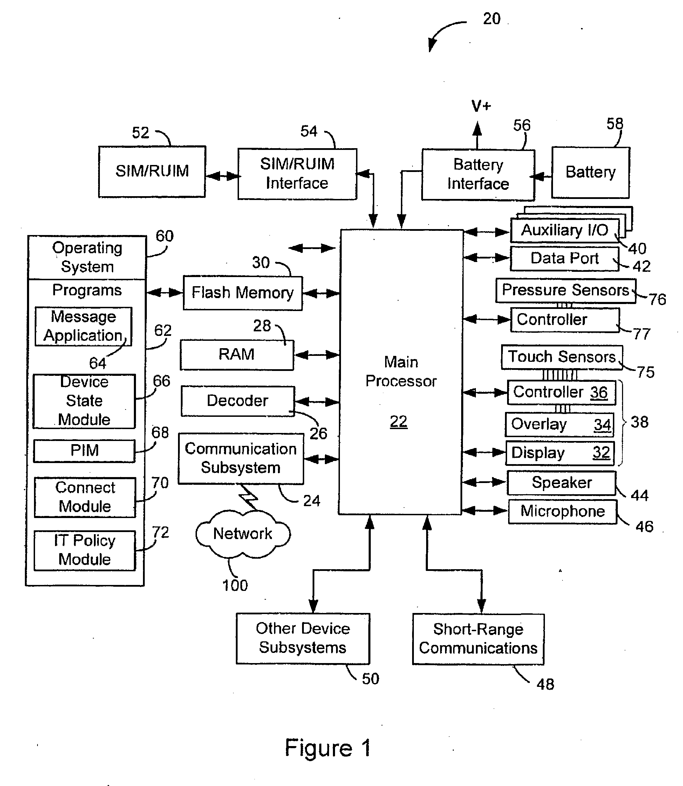

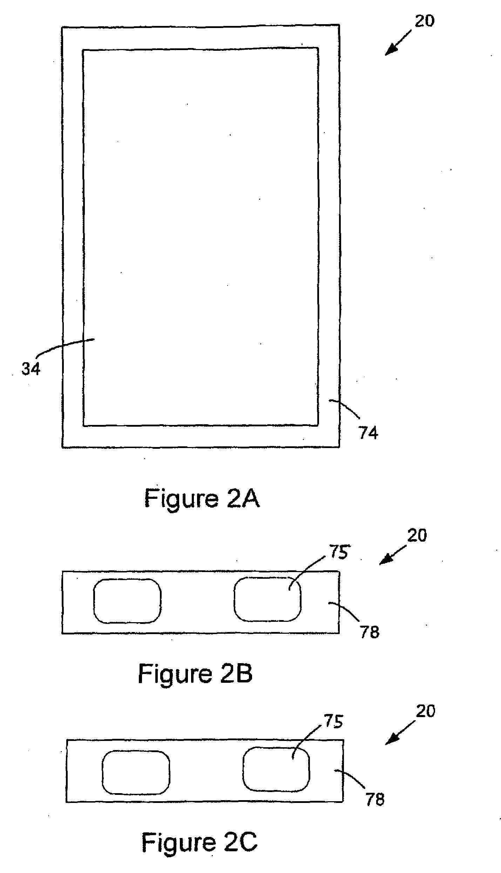

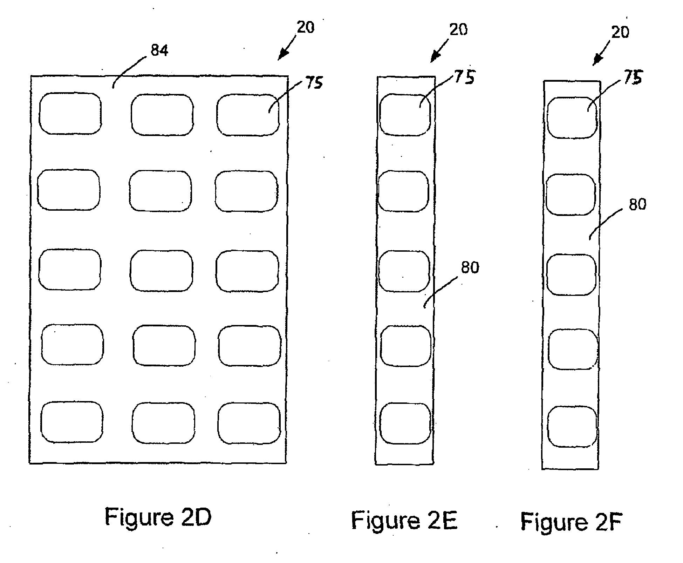

Reference is first made to Figures 1 and 2A to 2F to describe one embodiment of the portable electronic device 20. The portable electronic device 20 includes a housing 74, a display 32 exposed by the housing and an input device which in the present embodiment is a touch-sensitive overlay 34 for receiving user-input. The portable electronic device 20 also includes a plurality of touch sensor pads 75 on the housing for detecting touches on the portable electronic device 20, and functional components housed in the housing. The functional components include a processor 22 connected to the display 32, the input device (touch-sensitive overlay 34) and a memory device such as the flash memory 30. The flash memory 30 is provided for storage of computer-readable program code executable by the processor 22 for determining a device mode associated with touch events at the touch sensor pads 75 and for changing to the device mode associated with the touch events.

Referring to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 100. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 100 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 100 associated with the portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together make up a touch screen display 38, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 100, and device-resident functions such as a calculator or task list.

The portable electronic device 20 can send and receive communication signals over the wireless network 100 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 100. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 100 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 100. PIM data items may be seamlessly integrated, synchronized, and updated via the wireless network 100 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APls that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 100, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 100. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 100 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

Reference is now made to Figures 1, and 2A to 2F, which show a block diagram, and various views of an exemplary portable electronic device 20. The portable electronic device 20 includes a housing 74 that houses the internal components that are shown in Figure 1. The housing 74 is configured such that the touch screen display 38 is exposed for user-interaction therewith when the portable electronic device 20 is in use. The housing 74 includes a plurality of touch sensor pads 75 incorporated therein. In the present embodiment, the touch sensor pads 75 are capacitive touch sensor pads 75 located at the outer surface of the housing 74 and connected to the controller 36 for detecting a user's touch. The capacitive touch sensor pads 75 each include a layer of capacitive material of, for example, indium tin oxide (ITO) or other suitable material covered by a protective cover layer, for providing a discrete touch-sensitive zone on the housing 74.

Capacitive coupling occurs between the finger of a user and a respective one of the touch sensor pads 75, through the cover layer when the finger approaches the surface of the cover layer at the respective one of the touch sensor pads 75. A capacitive signal is sent to the controller 36 and, in turn, a digital signal is sent to the processor 22 as a result of the capacitive coupling. It will be appreciated that capacitive coupling increases as the finger approaches the cover layer at the touch sensor pad 75 and when the capacitive coupling reaches a critical threshold value, the signal is sent to the processor 22. The processor 22 determines which one of the touch sensor pads 75 is touched based on the signal received. Further, when multiple touches occur at respective touch sensor pads 75, multiple signals are sent to the processor 22 and the touch sensor pads 75 that are touched are determined.

According to the present exemplary embodiment, the housing 74 includes short sides 78, long sides 80, a front frame 82 and a base 84. The touch sensitive overlay 34 and display 32 are framed and therefore exposed by the front frame 82 for display of a graphical user interface (GUI) including a plurality of user-selectable features. The touch-sensitive input device includes the overlay 34 disposed on the display 32 and the controller 36 connected to the overlay 34. The touch-sensitive input device is for providing a touch-sensitive area on the display 32, for detecting an object such as a user's finger proximal the user-selectable features on the display 32 and user-interaction therewith via the touch-sensitive overlay 34. In the present example, user interaction with the graphical user interface is performed through the use of the touch-sensitive overlay 34. Thus, for example, a virtual keyboard can be provided via the touch screen display 38 for entry of data for composing an electronic message in the message application 64, for creating and storing PIM data, or for any other suitable application.

The touch screen display 38 can be any suitable touch screen display. In one embodiment, the touch screen display 38 is a capacitive touch screen display 38. Thus, the capacitive touch screen display 38 includes the display 32 and the touch-sensitive overlay 34, which in the present example is a capacitive touch-sensitive overlay 34. It will be appreciated that the capacitive touch-sensitive overlay 34 includes a number of layers in a stack and is fixed to the display 32 via a suitable optically clear adhesive. The layers include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

The X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user, resulting in a change in the electric field of each of the touch sensor layers. The signals represent the respective X and Y touch location values.

According to the present exemplary embodiment shown in Figures 2A to 2F, the touch sensor pads 75 are provided on each of the short sides 78, the long sides 80 and the base 84 of the housing 74. As shown, the short sidewalls 80 each include two discrete touch sensor pads 75 and the long sidewalls each include 5 discrete touch sensor pads 75, generally evenly distributed in a row. The base includes a total of 15 touch sensor pads, generally evenly distributed in 5 rows of three touch sensor pads 75 each.

It will be appreciated that when a user holds the portable electronic device 20, capacitive coupling occurs between the fingers of a user and respective ones of the touch sensor pads 75 in contact with the fingers of the user. Thus, if a user holds the portable electronic device 20 in one hand with four fingers touching one of the long sidewalls 80 at four respective touch sensor pads 75 and the fifth, opposable finger (thumb) touching the other of the long sidewalls 80 at a further one of the touch sensor pads 75, capacitive coupling occurs with the five touch sensor pads 75 that are touched by the respective fingers and respective signals are sent to the processor 22. The processor 22 then determines which ones of the touch sensor pads 75 are touched based on the signals received.

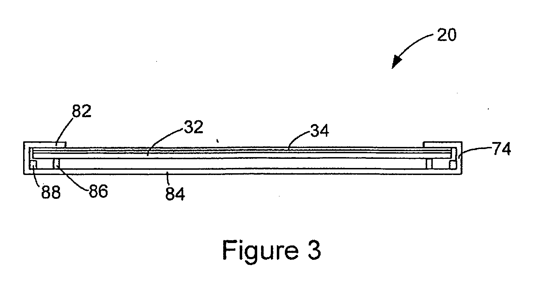

Referring now to Figure 3, there is shown a simplified sectional side view of a portable electronic device 20 according to the present exemplary embodiment. In the present exemplary embodiment, the touch screen display 38 is framed by the front frame 82 and is biased against the underside of the front frame 82 by biasing elements 86, which can be, for example, foam post biasing elements. Each of the biasing elements 86 is disposed proximal a respective corner of the portable electronic device 20 and includes a respective pressure sensor 76 (Fig. 1), such as a capacitive pressure sensor 76 (Fig. 1) connected to a controller 77 (Fig. 1) for measuring a change in capacitance as a result of deformation, therefore measuring the pressure at each of the biasing elements. Thus, force applied to the device can be measured. A small amount of movement is therefore permitted when a force is applied to the touch screen display 38 by, for example, a user pressing on the touch screen display 38 during selection of one of the user-selectabie options of the GUI. The movement of the touch screen display 38 is limited by display stops 88 at each corner of the portable electronic device 20. Thus, when a user applies a force to the touch screen display 38 of the portable electronic device 20, movement of the touch screen display 38 relative to the base 84 results in measurement of pressure by each of the four pressure sensors 76 of the respective biasing elements 86. The approximate location of application of force can be determined based on the pressure measurements at each of the four pressure sensors 76 of the respective biasing elements 86.

It will be understood from the foregoing that the location of a user's fingers on the portable electronic device 20 (touches on the portable electronic device 20) can be determined based on signals received from various touch sensor pads 75 as a result of capacitive coupling. Further, the location of a touch on the touch screen display 38 can be determined based on the signals received. Further still, the applied pressure resulting in relative movement of the touch screen display 38 with respect to the base 84 can be determined.

Portable electronic devices are commonly grasped differently depending on both the user of the device and the mode of operation. Thus, the user grasps the device such that the fingers of the user contact the device at different locations depending on the mode of operation. With the portable electronic device 20 as described above with reference to the exemplary embodiment shown in Figures 1 to 3, the locations of contact can be determined based on signals received from various touch sensor pads 75. Furthermore, the applied pressure resulting in relative movement of the touch screen display 38 with respect to the base can be determined. The locations of contact that are determined can be used to determine the intended mode of operation prior to, for example, user-selection of the mode.

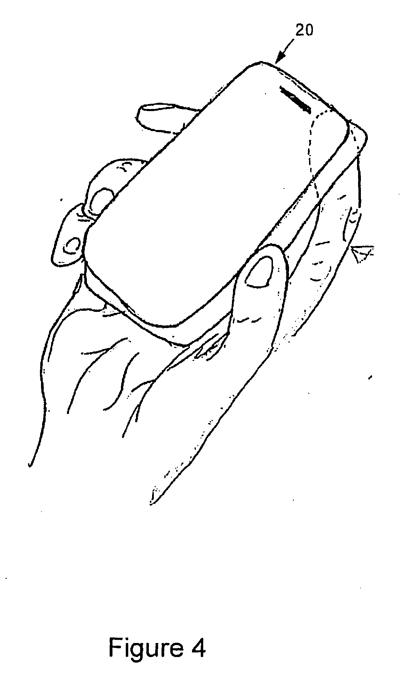

Referring now to Figure 4, for example, an exemplary portable electronic device 20 is shown grasped by a user for use in a voice communication (i.e. cellular telephone) mode. In the present example, the user grasps the portable electronic device 20 with three fingers along one of the long sides 80, a finger (thumb) on the opposing one of the long sides 80 and one finger on the base 84, proximal one of the short sides 78. The portable electronic device of Figure 4 is provided for exemplary purposes. It will be appreciated that the grasp is dependent on a number of factors, including the portable electronic device type, size and shape.

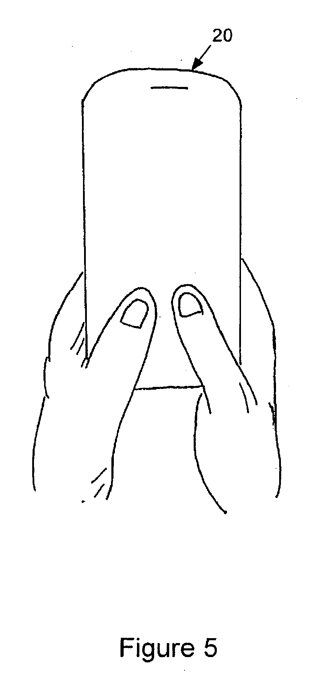

Figure 5 shows the exemplary portable electronic device 20 grasped by the user for use in a text entry mode, for example, a messaging mode such as an e-mail messaging mode. In the example shown in Figure 5, the user grasps the portable electronic device 20 with three fingers touching the base 84 and, when entering text, with a finger (thumb) on the touch screen display 38.

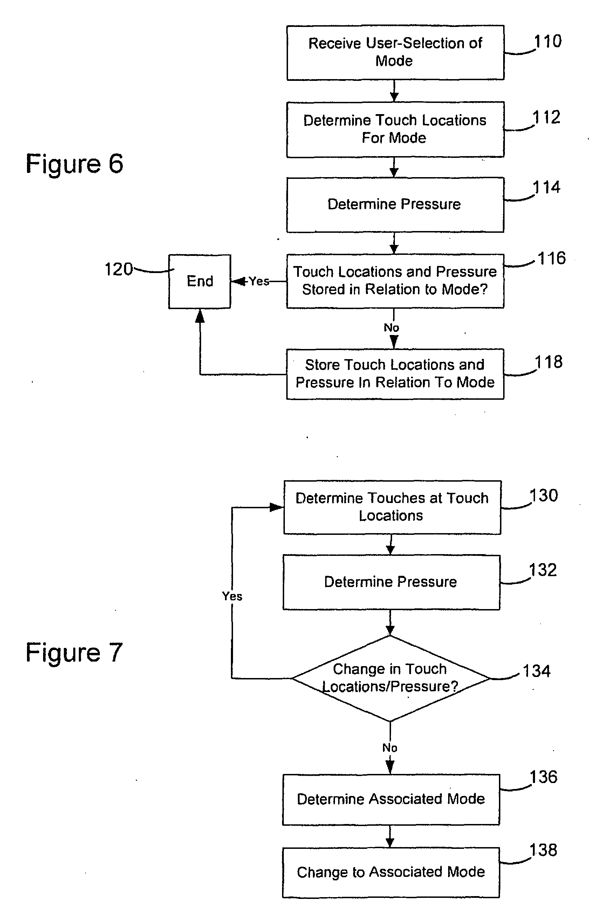

Reference is now made to Figure 6 to describe a method of storing touch location data and pressure data in association with a mode of the portable electronic device 20, according to an embodiment. It will be appreciated that the steps of Figure 6 are carried out by routines or subroutines of software executed by the processor 22. Coding of software for carrying out such steps is well within the scope of a person of ordinary skill in the art having regard to the present description. The portable electronic device 20 is grasped differently depending on both the user of the portable electronic device 20 and the mode of operation. In the present embodiment, the portable electronic device 20 receives a user-selection of a mode (step 110). For example, a user-selection of a voice communication mode, an e-mail messaging mode, a Web browser mode or any other suitable mode can be received at step 110. The portable electronic device 20 then determines the touch locations on the portable electronic device 20 when in the user-selected mode (step 112). Thus, the touch locations are determined based on signals received at the processor 22 as a result of capacitive coupling with the touch sensor pads 75. The applied pressure is also determined when in the user-selected mode (step 114) by determining the pressure at each of the four pressure sensors 76 of the respective biasing elements 86. It is then determined if the touch locations determined at step 112 and the pressure measurements determined at the biasing elements 86 at step 114 are already stored in association with the user-selected mode (step 116). If not, then the touch locations and pressure measurements are stored in association with the user-selected mode (step 118). For example, the touch locations and pressure measurements can be stored in a look-up table in relation to the user-selected mode. If, on the other hand, the touch locations and pressure measurements are already stored in association with the user-selected mode, the method of storing touch location data and pressure data ends at step 120. Thus, the portable electronic device 20 can store data including touch locations and pressure measurements in association with a mode. Further, different sets of data can be stored in association with respective modes.

In one example, a user selects a voice communications (cellular phone) mode on the portable electronic device 20 by, for example, user-selection of an option to answer a cellular phone call or by user-selection of an option to place a cellular phone call from a GUI in a voice communications application on the portable electronic device 20 (step 110). After a predetermined delay the touch locations are determined based on the signals received from the controller 36 (step 112). The delay provides time for the user to grasp the device in the desired manner for the mode as the user can change grasping positions between receipt of the user-selection and the use of the device when in the mode. The pressure is also determined (step 114) by determining the pressure at each of the four pressure sensors 76 of the respective biasing elements 86. In the present embodiment, the applied pressure is determined when the portable electronic device is grasped for the voice communication mode as shown in Figure 4. It is then determined that the touch locations and the pressure measurements are not already stored in association with the voice communication mode (step 116) and therefore the touch locations and pressure measurements are stored in association with the user-selected mode (step 118) in, for example, a look-up table. Thus, the portable electronic device 20 stores the data including touch locations and pressure measurements in association with the voice communication mode.

In another example, a user selects a messaging mode, such as a new email messaging mode by user selection of a messaging option (step 110). After a predetermined delay the touch locations are determined (step 112) along with the pressure (step 114). When the messaging option is selected, the user grasps the device for text entry as shown in Figure 5. It is then determined that the touch locations and the pressure measurements are not already stored in association with the voice communication mode (step 116) and therefore the touch locations and pressure measurements are stored in association with the user-selected mode (step 118) in, for example, a look-up table. Thus, the portable electronic device 20 stores the data including touch locations and pressure measurements in association with the messaging mode.

In a similar manner, touch locations and pressure measurements can be stored in association with other modes. For example, touch locations and pressure measurements can be stored in association with a lock mode for locking the device to inhibit unintentional input, a sleep mode for powering down the LCD display for saving battery power, a wake-up mode for waking the portable electronic device from the sleep mode for use. Touch locations and pressure measurements can be stored in association with still other modes of the portable electronic device 20.

Reference is now made to Figure 7 to describe a method controlling a portable electronic device 20 according to an embodiment. It will be appreciated that the steps of Figure 7 are carried out by routines or subroutines of software executed by the processor 22. Coding of software for carrying out such steps is well within the scope of a person of ordinary skill in the art having regard to the present description. According to the present embodiment, the touch locations (step 130) and the pressure measurements (step 132) are determined. The touch locations and pressure measurements are then compared to prior touch locations and pressure measurements to determine if there is a change in the either or both the touch locations and the pressure measurements. If there is no change in the touch locations and the pressure measurements, the method returns to step 130 to continue monitoring for changes in the touch locations and pressure measurements. If, on the other hand, a change in the touch locations and pressure measurements is determined at step 134, the associated mode is determined using, for example, the look-up table to match the mode with the associated touch locations and pressure measurements (step 136). The portable electronic device then changes modes to the mode associated with the touch locations and pressure measurements (step 138).

Continued reference is made to Figure 7 to describe one example of the method of controlling the portable electronic device 20 according to the present embodiment. In the present example, the user grasps the portable electronic device 20 for use in voice communication mode, for example, to place a cellular telephone call. For the purpose of the present example, the device is picked up from a rest surface such as a desk for use in placing the cellular telephone call. When the device is grasped, the touch locations are determined (step 130) and the pressure measurements are determined (step 132). A change in touch locations or pressure measurements or both compared to touch locations and pressure measurements prior to grasping for use in voice communication mode is detected (step 134) and the associated mode is determined. In the present example it is determined that the touch locations and pressure measurements are associated with the voice communication mode (step 136). Thus, the portable electronic device 20 changes to the voice communication mode by changing to a cellular telephone GUI for user entry of a telephone number for calling.

In another example, the user completes a cellular telephone conversation and sets the portable electronic device 20 down, for example, on a table. The touch locations are determined (step 130) and the pressure measurements determined (step 132). In the present embodiment, there are no touches at any of the touch sensor pads 75 and no applied pressure when the portable electronic device 20 is set down. Thus, a change is determined in the touch locations and the pressure (step 134). In the present example, the associated mode is determined to be a "sleep" mode for conserving battery power in which the voice communications are not active or "on hook (step 136): The portable electronic device 20 then changes to the "sleep" mode and goes "on hook", thereby ending the cellular telephone call (step 138).

In yet another example, the user grasps the portable electronic device 20 for creating a new e-mail message, as shown in Figure 5 in which the user grasps the portable electronic device 20 with three fingers touching the base 84. The touch locations are determined when the user grasps the portable electronic device 20 (step 130) and the pressure measurements are determined (step 132). At step 134, the change in the touch locations and pressure measurements is determined and the associated mode is determined at step 136. In the present example, the associated mode is determined to be an electronic messaging mode and the portable electronic device 20 changes to the messaging mode (step 138).

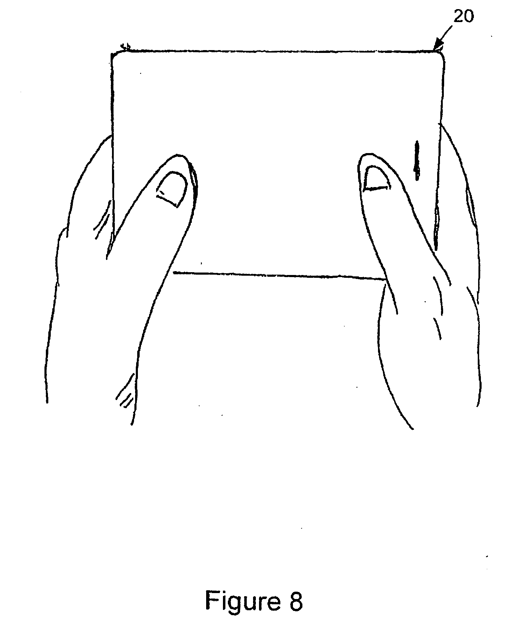

It will be appreciated that the present application is not limited to the examples described above and further examples are possible. In one example, the portable electronic device 20 provides a virtual keyboard such as a QWERTY keyboard on the touch screen display 38 for text entry. The virtual keyboard and displayed text can be changed between a portrait mode and a landscape mode depending on the touch locations determined by the user's grasp on the portable electronic device 20. Thus, for example, when the user's grasp changes from a grasp in which the display 32 is in portrait as shown in Figure 5 to a grasp in which the display 32 is in landscape as shown in Figure 8, the keyboard displayed on the touch screen display 38 changes. Further, the keyboard can change from a reduced virtual keyboard to a full virtual keyboard such as a QWERTY keyboard. Such a change can be carried out in an application, such as during data entry, for example, during typing of an electronic message.

In another example, the mode can be changed between a left-handed mode and right-handed mode, changing the locations of user-selectable options or icons on the touch screen display 38 based on the touch locations. In yet another example, when the portable electronic device 20 is grasped firmly resulting in pressure measurements above some predetermined threshold as determined by the pressure sensors 76, for example when the user is running, the portable electronic device 20 is locked to inhibit inadvertent input. Still other mode changes are also possible.

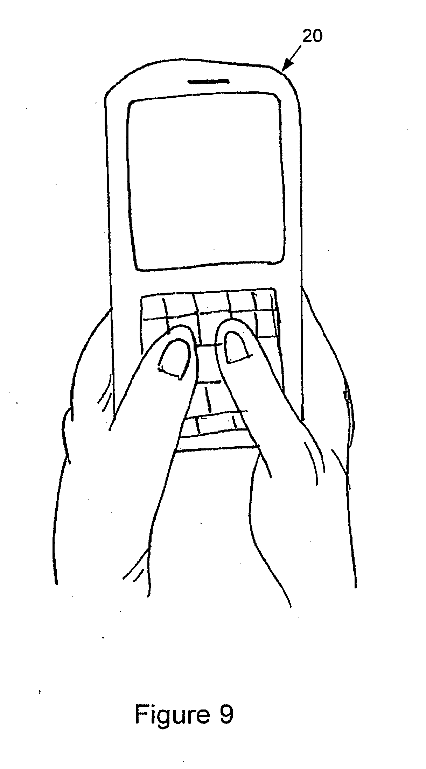

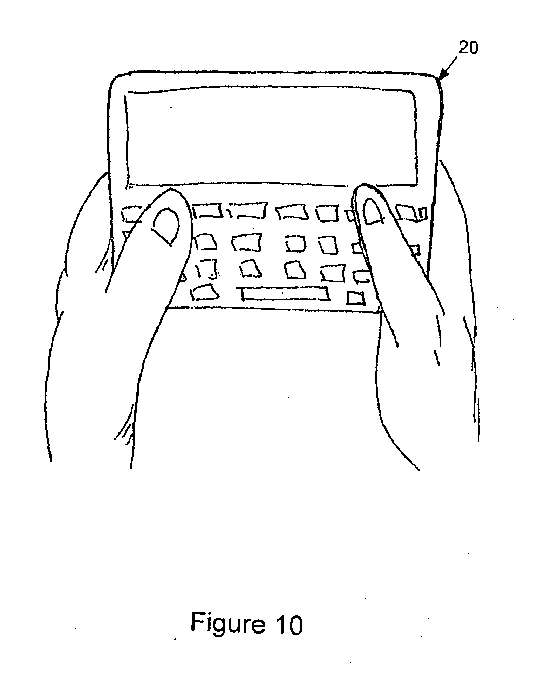

Figures 1 to 5 and 8 are provided for exemplary purposes and the location and quantity of touch sensor pads 75 can vary. Further, the present application its not limited to the portable electronic device 20 shown in Figures 1 to 5 and 8 as other portable electronic devices are possible. Examples of other portable electronic devices are shown in Figures 9 and 10 in which a portable electronic device 20 with a reduced button keyboard is shown in Figure 9, and a portable electronic device 20 with a full button keyboard such as a QWERTY keyboard is shown in Figure 10. Still other portable electronic devices are possible. The location and quantity of touch sensor pads can vary based on the portable electronic device. Thus, the location and quantity of touch sensor pads on the portable electronic devices shown in Figures 8, 9 and 10 can differ.

In the above-described embodiments, the mode changes are based on both touch locations on the portable electronic device 20 and pressure measurements. Rather than changing modes based on both touch locations and pressure, mode changes can be made based on touch locations only. Thus, it is possible that only touch locations are mapped to different modes. It is also contemplated that in the touch locations and pressure can be mapped for some applications while only touch locations are mapped for other applications. Furthermore, in the above-described embodiments, the pressure measurements are determined using biasing elements that include pressure sensors 76. It will be appreciated that other pressure sensing arrangements can be employed. For example, pressure sensors 76 can be employed at screw holes between the base 84 and the front frame 82. Still other arrangements are possible for measuring, pressure. Further still, with multiple pressure sensors 76, the location of application of pressure can be determined.

It will be appreciated that touch location and pressure data can be associated with device modes in any suitable manner and is not limited to the method described in Figure 6. For example, modes can be pre-associated with touch locations and pressure based on factory settings. Further, touch location and pressure data can be associated with corresponding modes in response to user-selection of an option to associate a mode with touch locations and pressure measurements.

While the embodiments described herein are directed to particular implementations of the electronic device and the method of controlling the same, it will be understood that modifications and variations to these embodiments are within the scope and sphere of the present application. For example, the present application has been described with particular reference to a capacitive touch screen device. The present application is not limited to touch screen devices as other portable electronic devices are possible as shown in Figures 9 and 10. Still other portable electronic devices are possible. The number, size and shape of the touch sensor pads and many of the features can differ while still providing the same function.

Many other modifications and variations may occur to those skilled in the art. All such modifications and variations are believed to be within the sphere and scope of the present application.

## Claims

1. A method of controlling a portable electronic device (20) comprising a display (38), the method comprising:
associating touch locations on the portable electronic device (20) outside the display (38) with an application by determining the touch locations when in the , application and storing the touch locations in association with the application; detecting touches at the stored touch locations;
determining the application associated with the stored touch locations; and changing to the application associated with the stored touch locations.

2. The method according to claim 1 wherein associating touch locations comprises associating applied pressure with the application by determining the applied pressure when in the application and storing comprises storing the determined applied pressure in association with the application.

3. The method according to claim 2, comprising detecting applied pressure on the portable electronic device (20) prior to determining the application and wherein determining the application comprises determining the application associated with both the stored touch location and the stored applied pressure.

4. The method according to claim 3, wherein determining applied pressure comprises measuring pressure at more than one location at the portable electronic device (20).

5. The method according to claim 4, wherein determining applied pressure comprises measuring pressure proximal each of four corners of the portable electronic device (20).

6. A computer-readable medium having computer-readable code embodied therein for execution by a processor (22) of a computing device (20) for causing said computing device (20) to implement the method according to any one of claims 1 to 5.

7. A portable electronic device (20) comprising:
a housing (74);
a display device (32) exposed by the housing (74);
an input device (34) for receiving user-input;
a plurality of sensors (75) on the housing (74) for detecting touches on the portable electronic device (20);
functional components housed in the housing (74) comprising a memory device (30) and a processor (22) operably connected to the sensors (75), the display device (32), the input device (34), and the memory device (30); and
the processor (22) adapted to execute computer readable code stored in the memory device (30) to cause the portable electronic device (20) to carry out the method as claimed in any one of claims 1 to 5.

8. The portable electronic device (20) according to claim 7, wherein the functional components comprise a controller (36) connected to the sensors (75) and to the processor (22).

9. The portable electronic device (20) according to claim 7 or claim 8, wherein the plurality of touch sensors (75) comprise a plurality of capacitive touch sensors disposed on the housing (74).

10. The portable electronic device (20) according to any one of claims 7 to 9, wherein the plurality of touch sensors (75) comprise at least one touch sensor (75) on each one of a pair of opposing sidewalls (78, 80) of the housing (74).

11. The portable electronic device (20) according to any one of claims 7 to 9, wherein the plurality of touch sensors (75) comprise at least one touch sensor (75) on each sidewall (78, 80) of the housing (74).

12. The portable electronic device (20) according to any one of claims 7 to 11, wherein the plurality of touch sensors (75) comprise at least one touch sensor (75) on a base (84) of the housing (74).

13. The portable electronic device (20) according to any one of claims 7 to 12, comprising at least one pressure sensor (76) for determining an applied pressure to the portable electronic device (20).

14. The portable electronic device (20) according to claim 13, comprising a plurality of pressure sensors (76) for determining applied pressure to the portable electronic device (20).

15. The portable electronic device (20) according to claim 14, wherein respective ones of said pressure sensors (76) are located at each of four corners of the housing (74).

16. The portable electronic device according to claim 14 or claim 15, wherein the pressure sensors (76) comprise strain gauges.

17. The portable electronic device according to claim 14 or claim 15, wherein the pressure sensors (76) comprise capacitive sensors.

## Patentansprüche

1. Verfahren zur Steuerung einer tragbaren elektronischen Vorrichtung (20), die eine Anzeige (38) aufweist, wobei das Verfahren aufweist:
Zuordnen von Berührungsstellen auf der tragbaren elektronischen Vorrichtung (20) außerhalb der Anzeige (38) mit einer Anwendung durch Bestimmen der Berührungsstellen, wenn in der Anwendung, und Speichern der Berührungsstellen in Verbindung mit der Anwendung;
Erfassen von Berührungen an den gespeicherten Berührungsstellen; Bestimmen der Anwendung, die zu den gespeicherten Berührungsstellen gehört; und
Wechsel zu der Anwendung, die zu den gespeicherten Berührungsstellen gehört.

2. Verfahren gemäß Anspruch 1, wobei ein Zuordnen von Berührungsstellen aufweist ein Assoziieren von angewendetem Druck mit der Anwendung durch Bestimmen des angewendeten Drucks, wenn in der Anwendung, und ein Speichern aufweist ein Speichern des angewendeten Drucks in Verbindung mit der Anwendung.

3. Verfahren gemäß Anspruch 2, das aufweist Erfassen eines angewendeten Drucks auf die tragbare elektronische Vorrichtung (20) vor einem Bestimmen der Anwendung und wobei ein Bestimmen der Anwendung aufweist ein Bestimmen der Anwendung, die sowohl zu der gespeicherten Berührungsstelle als auch des gespeicherten angewendeten Drucks gehört.

4. Verfahren gemäß Anspruch 3, wobei ein Bestimmen eines angewendeten Drucks aufweist ein Messen von Druck an mehr als einer Stelle an der tragbaren elektronischen Vorrichtung (20).

5. Verfahren gemäß Anspruch 4, wobei ein Bestimmen eines angewendeten Drucks aufweist ein Messen von Druck in der Nähe jeder der vier Ecken der tragbaren elektronischen Vorrichtung (20).

6. Computer-lesbares Medium mit darin enthaltenem Computer-lesbaren Code zur Ausführung durch einen Prozessor (22) einer Computervorrichtung (20), um die Computervorrichtung (20) zu veranlassen, das Verfahren gemäß einem der Ansprüche 1 bis 5 zu implementieren.

7. Tragbare elektronische Vorrichtung (20), die aufweist:
ein Gehäuse (74);
eine Anzeigevorrichtung (32), die durch das Gehäuse (74) exponiert ist; eine Eingabevorrichtung (34) zum Empfangen einer Benutzereingabe;
eine Vielzahl von Sensoren (75) an dem Gehäuse (74) zum Erfassen von Berührungen auf der tragbaren elektronischen Vorrichtung (22); funktionelle Komponenten, die in dem Gehäuse (74) untergebracht sind, die eine Speichervorrichtung (30) und einen Prozessor (22) aufweisen, der betriebsfähig mit den Sensoren (75), der Anzeigevorrichtung (32), der Eingabevorrichtung (34) und der Speichervorrichtung ( 30) verbunden ist; und
wobei der Prozessor (22) ausgebildet ist, einen Computer-lesbaren Code auszuführen, der in der Speichervorrichtung (30) gespeichert ist, um die tragbare elektronische Vorrichtung (20) zu veranlassen, das Verfahren gemäß einem der Ansprüche 1 bis 5 auszuführen.

8. Tragbare elektronische Vorrichtung (20) gemäß Anspruch 7, wobei die funktionellen Komponenten eine Steuervorrichtung (36) aufweisen, die mit den Sensoren (75) und dem Prozessor (22) verbunden ist.

9. Tragbare elektronische Vorrichtung (20) gemäß Anspruch 7 oder Anspruch 8, wobei die Vielzahl von Berührungssensoren (75) eine Vielzahl von kapazitiven Berührungssensoren aufweisen, die an dem Gehäuse (74) angeordnet sind.

10. Tragbare elektronische Vorrichtung (20) gemäß einem der Ansprüche 7 bis 9, wobei die Vielzahl von Berührungssensoren (75) zumindest einen Berührungssensor (75) an jeder eines Paares von gegenüberliegenden Seitenwände (78, 80) des Gehäuses (74) aufweisen.

11. Tragbare elektronische Vorrichtung (20) gemäß einem der Ansprüche 7 bis 9, wobei die Vielzahl von Berührungssensoren (75) zumindest einen Berührungssensor (75) an jeder Seitenwand (78, 80) des Gehäuses (74) aufweisen.

12. Tragbare elektronische Vorrichtung (20) gemäß einem der Ansprüche 7 bis 11, wobei die Vielzahl von Berührungssensoren (75) zumindest einen Berührungssensor (75) an einer Basis (84) des Gehäuses (74) aufweisen.

13. Tragbare elektronische Vorrichtung (20) gemäß einem der Ansprüche 7 bis 12, die zumindest einen Drucksensor (76) aufweist zum Bestimmen eines angewendeten Drucks auf die tragbare elektronische Vorrichtung (20).

14. Tragbare elektronische Vorrichtung (20) gemäß Anspruch 13, die eine Vielzahl von Drucksensoren (76) aufweist zum Bestimmen eines angewendeten Drucks auf die tragbare elektronische Vorrichtung (20).

15. Tragbare elektronische Vorrichtung (20) gemäß Anspruch 14, wobei sich jeweilige der Drucksensoren (76) an jeder von vier Ecken des Gehäuses (74) befinden.

16. Tragbare elektronische Vorrichtung gemäß Anspruch 14 oder Anspruch 15, wobei die Drucksensoren (76) Dehnungsmesser aufweisen.

17. Tragbare elektronische Vorrichtung gemäß Anspruch 14 oder Anspruch 15, wobei die Drucksensoren (76) kapazitive Sensoren aufweisen.

## Revendications

1. Procédé de commande d'un dispositif électronique portable (20) comprenant un dispositif d'affichage (38), le procédé comprenant :
l'association d'emplacements de toucher sur le dispositif électronique portable (20) à l'extérieur du dispositif d'affichage (38) à une application par détermination des emplacements de toucher lorsqu'on se trouve dans l'application et mémorisation des emplacements de toucher en association avec l'application ;
la détection de touchers aux emplacements de toucher mémorisés ;
la détermination de l'application associée aux emplacements de toucher mémorisés ; et
le passage à l'application associée aux emplacements de toucher mémorisés.

2. Procédé selon la revendication 1, dans lequel l'association d'emplacements de toucher comprend l'association d'une pression appliquée à l'application par détermination de la pression appliquée lorsqu'on se trouve dans l'application et la mémorisation comprend la mémorisation de la pression appliquée déterminée en association avec l'application.

3. Procédé selon la revendication 2, comprenant la détection d'une pression appliquée sur le dispositif portable électronique (20) avant la détermination de l'application, et dans lequel la détermination de l'application comprend la détermination de l'application associée tout à la fois à l'emplacement de toucher mémorisé et à la pression appliquée mémorisée.

4. Procédé selon la revendication 3, dans lequel la détermination d'une pression appliquée comprend la mesure d'une pression en plus d'un emplacement sur le dispositif électronique portable (20).

5. Procédé selon la revendication 4, dans lequel la détermination d'une pression appliquée comprend la mesure d'une pression à proximité de chacun de quatre coins du dispositif électronique portable (20).

6. Support lisible par ordinateur comportant un code lisible par un ordinateur incorporé à l'intérieur de celui-ci pour l'exécution par un processeur (22) d'un dispositif de calcul (20) pour amener ledit dispositif de calcul (20) à mettre en oeuvre le procédé selon l'une quelconque des revendications 1 à 5.

7. Dispositif électronique portable (20), comprenant :
un boîtier (74) ;
un dispositif d'affichage (32) exposé par le boîtier (74) ;
un dispositif d'entrée (34) pour recevoir une entrée d'utilisateur ;
une pluralité de capteurs (75) sur le boîtier (74) pour détecter des touchers sur le dispositif électronique portable (20) ;
des composants fonctionnels logés dans le boîtier (74), comprenant un dispositif de mémoire (30) et un processeur (22) connectés de façon fonctionnelle aux capteurs (75), au dispositif d'affichage (32), au dispositif d'entrée (34) et au dispositif de mémoire (30) ; et
le processeur (22) étant adapté pour exécuter un code lisible par ordinateur mémorisé dans le dispositif de mémoire (30) de façon à amener le dispositif électronique portable (20) à mettre en oeuvre le procédé selon l'une quelconque des revendications 1 à 5.

8. Dispositif électronique portable (20) selon la revendication 7, dans lequel les composants fonctionnels comprennent un dispositif de commande (36) connecté aux capteurs (75) et au processeur (22).

9. Dispositif électronique portable (20) selon la revendication 7 ou la revendication 8, dans lequel la pluralité de capteurs de toucher (75) comprennent une pluralité de capteurs de toucher capacitifs disposés sur le boîtier (74).

10. Dispositif électronique portable (20) selon l'une quelconque des revendications 7 à 9, dans lequel la pluralité de capteurs de toucher (75) comprennent au moins un capteur de toucher (75) sur chacune d'une paire de parois latérales opposées (78, 80) du boîtier (74).

11. Dispositif électronique portable (20) selon l'une quelconque des revendications 7 à 9, dans lequel la pluralité de capteurs de toucher (75) comprennent au moins un capteur de toucher (75) sur chaque paroi latérale (78, 80) du boîtier (74).

12. Dispositif électronique portable (20) selon l'une quelconque des revendications 7 à 11, dans lequel la pluralité de capteurs de toucher (75) comprennent au moins un capteur de toucher (75) sur une base (84) du boîtier (74).

13. Dispositif électronique portable (20) selon l'une quelconque des revendications 7 à 12, comprenant au moins un capteur de pression (76) pour déterminer une pression appliquée sur le dispositif électronique portable (20).

14. Dispositif électronique portable (20) selon la revendication 13, comprenant une pluralité de capteurs de pression (76) pour déterminer une pression appliquée au dispositif électronique portable (20).

15. Dispositif électronique portable (20) selon la revendication 14, dans lequel des capteurs respectifs parmi lesdits capteurs de pression (76) sont disposés à chacun de quatre coins du boîtier (74).

16. Dispositif électronique portable selon la revendication 14 ou la revendication 15, dans lequel les capteurs de pression (76) comprennent des jauges de contrainte.

17. Dispositif électronique portable selon la revendication 14 ou la revendication 15, dans lequel les capteurs de pression (76) comprennent des capteurs capacitifs.
